# EUROPEAN PATENT APPLICATION

(11) **EP 1 674 530 A1**
(43) Date of publication of application: **28.06.2006**
(21) Application number: 04106986.5
(22) Date of filing: 24.12.2004
(51) Int. Cl.: C08L 101/00, C08L 53/02, C08L 67/02, C08L 75/04

(54) **High melt strength thermoplastic elastomer composition**

(71) Applicant: KRATON Polymers Research B.V., 1030 BH Amsterdam (NL)
(72) Inventor: Muyldermans, Xavier Kraton Polymers Research S.A., 1348 Ottignies, Louvain-La-Neuve (BE); Coignoul, Emmanuelle Kraton Polymers Research S.A., 1348, Ottignies-Louvain-La-Neuve (BE)
(74) Representative: Kortekaas, Marcel C.J.A.

(57) **Abstract**

A high melt strength thermoplastic elastomer composition, comprising:
(i) at least one linear crystalline polyolefin, having a melting temperature (Tm) of at least 100°C and a Polydispersity Index (PI) of more than 20, and
(ii) at least one thermoplastic elastomer (TPE) compatible with the polyolefin (i), wherein the TPE has a compression set below 50% at ambient temperature (ASTM D395-03, "Compression Set under constant deflection in air"), wherein the amount of component (i) is in the range of 0.1 to 10 wt% calculated on the whole of (i) and (ii); a process for the preparation of shaped polymeric articles thereof, and shaped polymeric articles so prepared.

## Description

### Technical field

The present invention relates to a high melt strength thermoplastic elastomer composition, to a process for the manufacture of shaped elastomeric articles and to shaped elastomeric articles derived from said composition. More in particular the present invention relates to a thermoplastic elastomer composition, comprising at least one linear crystalline polyolefin and at least one thermoplastic elastomer (which itself may be a compound). The novel composition is to be used in processes involving a non supported elongation step like foaming, blow moulding, profile extrusion and thermoforming, and more in particular extrusion foaming.

### Background art

A thermoplastic elastomer (TPE) is a material that exhibits rubber-like characteristics, yet may be melt processed with most thermoplastic processing equipment, such as by extrusion. The thermoplastic elastomer may be a block copolymer, but also a thermoplastic vulcanizate, in other words an elastomer-plastic blend comprising finely divided elastomer particles dispersed in a relatively small amount of plastic, generally made by a method called dynamic vulcanization. The rubber-like characteristics typically desired are high extensibility, mechanical recovery, resiliency, and low temperature ductility. An excellent book on such products is . THERMOPLASTIC ELASTOMERS, A Comprehensive Review. Edited by LEGGE . Munich Vienna New York 1987, ISBN3446148272.

In **US 4898760** a process and apparatus are described for extruding a soft, low density elastomeric thermoplastic foam. The foam is made of a melted SANTOPRENE ™/blowing agent mixture, SANTOPRENE being a thermoplastic elastomer prepared by dynamic vulcanization of blends of olefin rubber as elastomer with polyolefin resin as plastic. However, said foamable compositions and articles prepared there from suffer serious drawbacks. For instance it is very difficult with those compositions to obtain simultaneously highly closed cell structure, a smooth skin and an acceptable density reduction due to their non acceptable melt strength to flow ratio.

From **US 6127444** polymeric compositions were known, comprising:
a) a block copolymer, comprising at least two external monovinyl aromatic hydrocarbon blocks and at least one internal hydrogenated conjugated diene block, wherein the total monovinyl aromatic hydrocarbon content was from 20 to 50 % by weight and the total apparent molecular weight was from 140,000 to 400,000 g/mol;
b) from 50 to 250 parts by weight per 100 parts by weight of component (a) of a plasticizer;
c) from 10 to 100 parts by weight per 100 parts by weight of a polybutene -1 polymer having a melt index at 2.16 kg/190°C of from 0.05 to 40.0; and
d) a blowing agent. This reference further relates to the use of the composition for the preparation of foamed compounds.

From **EP 0794226 A** a foamable olefin thermoplastic elastomer composition is known comprising (A) a partially cross-linked thermoplastic elastomer composition, (B) long-chain branch-containing polypropylene and (C) a foaming agent. The partially cross-linked thermoplastic elastomer composition (A) is obtained by dynamically heat-treating a mixture in the presence of organic peroxide, said mixture comprising specific proportions of a peroxide cross-linking type olefin copolymer rubber (a), which is an ethylene/ alpha-olefin copolymer rubber composed of ethylene, an alpha-olefin of 3 to 20 carbon atoms and optionally a nonconjugated diene, and a peroxide-decomposition type olefin plastic (b), which is an alpha-olefin (co)polymer containing a specific amount of an alpha-olefin of 3 to 20 carbon atoms and having a specific MFR. Also disclosed is a foamed product obtained by heating the foamable olefin thermoplastic elastomer composition. From the foamable olefin thermoplastic elastomer composition, a foamed product having an expansion ratio of at least 2 times, being free from surface roughening caused by defoaming, being soft to the touch and showing excellent heat resistance and weathering resistance can be produced with high productivity through simplified steps.

**In US 6221964** foamable polymeric compositions are claimed, comprising a thermoplastic elastomer on the basis of a polyolefin and an at least partially vulcanised rubber, in an amount in the range of from 25-85 wt%, based on the weight of the polyolefin and the rubber, wherein the polyolefin is a polypropylene homo or copolymer, having: a weight average molecular weight M_{w} (determined using GPC at a temperature of 145°C) of at least 200,000, and an elongational viscosity (measured at a temperature of 170°C at a rate of elongation of 0.03 s⁻¹ and at a time of 10 s) EV (170/10) of at least 14,000 Pa.s.

From **US 6503985** was known a thermoplastic vulcanizate prepared by a process comprising the steps of dynamically vulcanizing a vulcanizable rubber within a mixture that includes from about 15 to about 90 percent by weight of the rubber and from about 10 to about 85 percent by weight of a long-chain branched thermoplastic resin, where the long-chain branched thermoplastic resin is (i) an alpha-olefin polymer, (ii) a copolymer of an alpha-olefin and an alpha-omega-olefin diene, or (iii) a mixture thereof, where the long-chain branched thermoplastic resin is characterized by a weight average molecular weight from about 100,000 to about 600,000, a number average molecular weight from about 40,000 to about 200,000, a z-average molecular weight from about 400,000 to about 2,000,000, a <g'> from about 0.2 to about 0.95, and a melt flow rate from about 0.3 to about vis 30 dg/min.

In **WO 9964510** thermoplastic elastomer compositions are described having improved processability while maintaining good physical properties that are prepared from a mixture of olefinic rubber and a polypropylene composition having a melt flow rate in the range of from about 0.5 to about 5 dg/min. and a molecular weight distribution Mw/Mn of greater than 5.5 up to about 20. The rubber component of the mixture may be at least partially cured by dynamic vulcanization. Preferably said polypropylene polymer composition had a molecular weight distribution in the range of from 6 to 15 and had a melt flow rate in the range of about 0.5 to 4 dg/min.

From **US 6646056** polymer compositions are known that are useful as thermoplastic elastomers for extrusion, calendering, blow molding, thermoforming, and foam processing. Such improved melt strength thermoplastic elastomers include a blend of propylenic resin (A) and ethylenic elastomer (B), wherein the (A) resin is partially branched and/or the (B) elastomer is partially crosslinked by the addition of multifunctional acrylic monomer (C) containing at least three acrylate groups.

From **EP 1491578 A** (KRATON POLYMERS RESEARCH B.V.) 29.12.2004 , foamable compositions are known which comprise at least:
(a) 100 parts by weight of one ore more selectively hydrogenated block copolymers, having at least two resinous blocks A of non-hydrogenated predominantly polymerized monovinyl arene, and a selectively hydrogenated elastomeric block B, wherein said block B prior to hydrogenation being predominantly a polymerized conjugated diene or dienes, said block copolymer having a total apparent molecular weight of at least 250 kg/mole, and containing polymerized monovinyl arene blocks of true molecular weight of at least 18 kg/mole,
(b) 5 to 50, preferably from 15 to 40 parts by weight of one or more selectively hydrogenated block copolymers having at least two resinous blocks A' of non-hydrogenated predominantly polymerized monovinyl arene, and an selectively hydrogenated elastomeric block B', wherein said block B' prior to hydrogenation has been derived from a polymerized conjugated diene or dienes as a major component which may be mixed with minor proportions of other copolymers (e.g. vinyl aromatic) i.e. ≤ 25 wt%, and said block copolymer having a total apparent molecular weight in the range of from 50,000 to 180,000, while the resinous blocks A' shown an true molecular weight in the range of from 3 to 20 kg/mole and preferably from 5 to 15 kg/mole,
(c) from 25 to 80 parts by weight of a linear crystalline polymer comprising propylene as major component, with a Vicat softening temperature in the range of from 130°C to 180°C and a MFR in the range of from 0.5 to 30 dg/min and a polydisperity index of at least 4.5,
(d) from 100 to 250 parts by weight of a softener compatible with blocks B and B',
(e) from 0.01 to 3 wt%, relative to the weight of the primary components (a) up to (e) of a solid chemical nucleating agent of the endothermic group in combination with a blowing agent, and optionally
(f) one or more secondary components selected from PPO and/or any resins compatible with block copolymer component (a), antioxidants, UV-stabilizers, flame retardants, surface modifying agents and inorganic fillers.

However, the thermoplastic elastomer compositions disclosed in said hereinbefore discussed documents did not show a combination of high melt elasticity (melt strength) together with an easy deformability (low shear viscosity or high flow), as presently required by industry in order to enable an efficient processing involving a melt elongation step like in foaming for instance. It will be appreciated that e.g. for foaming a high flow is required to enable easy growth of the bubbles while high melt strength is required at the same time to avoid breakage of the walls formed between the bubbles leading to unacceptable level of open, i.e. an optimal combination of their resistance to elongation during their processing, while maintaining acceptable mechanical elastic properties and a sufficient flow necessary to reach good surface appearance and easy.

It will be appreciated that there is strong need for further improved thermoplastic elastomer (TPE) compositions, having an improved high melt strength, which are in particular useful in processes involving a non supported elongational step like foaming, blow moulding, profile extrusion, calendering and thermoforming. Therefore an object of the present invention is to provide such TPE compositions aimed at. Another object of the present invention is to provide a process for foaming such a modified TPE composition. Still another object of the present invention is formed by shaped foamed elastomeric articles, derived from the hereinbefore mentioned TPE compositions. As result of extensive research and experimentation said improved TPE compositions aimed at have surprisingly been found.

### Disclosure of the invention

Accordingly a high melt strength thermoplastic elastomer composition is provided, comprising:
(i) at least one linear crystalline polyolefin, having a melting temperature (Tm) of at least 100°C and a Polydispersity Index (PI) of more than 20, and
(ii) at least one thermoplastic elastomer (TPE) compatible with the polyolefin (i), wherein the TPE has a compression set (CS) below 50% at ambient temperature after 24h compression (ASTM D395-03, "Compression Set under constant deflection in air"), wherein the amount of component (i) is in the range of 0.1 to 10 wt% calculated on the whole of (i) and (ii).

Moreover the invention also provides a process for the manufacture of shaped articles, by processing the hereinbefore defined TPE compositions, involving a non supported elongational step ,like foaming, blow moulding, profile extrusion, or thermoforming, and more in particular foaming, and to shaped articles obtainable by the hereinbefore specified process

### Mode(s) for carrying out the invention

Following is a description of the respective ingredients, which may be used to formulate the TPE compositions of this invention.

Component (i) is a linear, crystalline polyolefin or a mixture thereof. It is characterized by having a Polydispersity Index (PI) of more than 20, preferably of more than 20 to 50, more preferably up to 40, most preferably up to 30.

The polydispersity index, has been defined by **ZEICHNER, et al.** A Comprehensive Evaluation of Polypropylene Melt Rheology. *Proc. 2nd world congr., Chem. Eng. ,* 1981, vol. 6, p. 333-373. It is related to the molecular weight distribution through a strong correlation with Mw/Mn, and is determined by means of an isothermal dynamic frequency sweep, performed for instance on a Rheometric RDA2 dynamic mechanical analyser, within the linear viscoelastic region of the molten material (e.g., temperature 190°C, strain amplitude 10%, frequency rate 0.1-500 rad/s, data collection at 10 data points per decade).

Component (i) is preferably derived from propylene as predominant or sole monomer. Suitably these high PI polypropylenes or propylene copolymers have a melting temperature of at least 130°C. Polyolefins are often characterized by way of Melt Flow Rate (MFR, determined in accordance with ASTM D 1238 (condition L)). Polymers suitable in the present composition have a MFR ranging from 0.05 to 50 dg/min., preferably from 1 to 10 dg/min. They will normally have a number average molecular weight (Mn) in the range of from 10,000 to 250,000 g/mole.

Preferred polyolefins are semi crystalline homopolymers of propylene, but random copolymers of propylene as main monomer and one or more other α-olefin comonomers having 2-6 carbon atoms, such as ethylene, 1-butene, isobutylene, 1-pentene, in an proportion of at most 20 wt% of the total monomer mass, can also be suitably used in the composition of the present invention. More preferred polypropylene copolymers have been derived from propylene, mixed with from 1 to 5 wt % of ethylene.

Thus the term "polypropylene" as used throughout the specification is intended to cover both homopolymers and copolymers of propylene.

The preparation of component (i) is known and not part of the present invention. For instance, polypropylenes suitable for use herein may be prepared by combining polypropylenes prepared in separate reactors under differing polymerisation conditions or by sequential polymerisation of monomer in at least two separate reactor zones wherein differing polymerisation conditions in each zone favour the production of polypropylene having different MFR and Molecular Weight Distribution properties.

More preferably the linear polyolefin component (i) to be used in the compositions of the present invention are manufactured by means of a multi-zone circulating reactor system (loop reactor), wherein bimodality of the polymer is created within one single reactor, operating at different conditions between various zones inside the reactor, resulting in polymer particles, having an onion like structure, comprising layers being of a different Mm. In such process the catalyst is continuously fed to the multi-zone circulating reactor. In a specially designed loop-reactor consisting of two reactor zones, the growing polymeric granules are circulated between the two different zones. In one "riser" zone the polymer particles are entrained upward in a fast fluidisation regime by the monomer gas flow from a blower, while in the top of the reactor the polymer particles enter a section, wherein a downward dense-phase plug-flow regime under gravity occurs. At the bottom of the reactor the polymer particles are again fed to the "riser " section

Preferred linear, crystalline polypropylenes (i) have a Tm of above 140°C.

According to a preferred embodiment of the compositions of the present invention, the linear, crystalline polypropylene component (i) occurs in a proportion of from 0.5 to less than 10 wt%, more preferably of from 1 to 5 wt% relative to the weight of the components (i) and (ii).

Component (ii) of the composition is the thermoplastic elastomer (TPE) or rubber component of the composition. It is defined by the compression set, here determined in accordance with test Method B of ASTM D395-03. A further feature of the component (ii) is that it should be compatible with component (i), which is a polyolefin. Compatibility is a property that those skilled in the art are quite familiar with and generally requires no more than the preparation of a blend and visual inspection of the blend.

Examples of thermoplastic elastomers that may be used in the composition of the present invention may be found in the review by Messrs Legge, Holden and Schroeder, cited in paragraph [0002] of this specification. The thermoplastic elastomers discussed in this review include graft and block copolymers as well as melt-mixed polymers that exhibit thermoplastic elastomer behaviour upon dynamical vulcanization.

Suitable thermoplastic elastomers discussed in this review include:
thermoplastic polyurethane elastomers (Chapter 2):
thermoplastic polyester elastomers (Chapter 8);
polyesteramide and polyetherester amide thermoplastic elastomers (Chapter 9A), as well as polyether block amide thermoplastic elastomers (Chapter 9B);
thermoplastic elastomers based on polystyrene-polydiene block copolymers (Chapters 3, 4, 12-14);
Poly-alpha-olefin based thermoplastic elastomers (Chapter 5): and
elastomer-thermoplastic blends, when dynamically vulcanized (Chapter 7).

Significant improvements have, for instance, been found for TPE compositions wherein component (ii) is a thermoplastic polyester elastomer such as HYTREL™.

Component (ii), however, is preferably a thermoplastic elastomer selected from the last two classes of TPE's mentioned above: thermoplastic elastomers based on polystyrene-polydiene block copolymers (which definition includes polymers made with styrene analogs and copolymers containing a further monomer), and dynamically vulcanized blends of elastomer- thermoplastic blends (so-called TPV's). Component (ii) may also be a mixture of one or more of these components as well as a blend thereof with a plastic (for instance a polyolefin with a PI of less than 20), a blend thereof with a plasticizer (e.g., an oil) or a combination thereof. These preferred components (ii) are discussed in further detail hereinafter.

Thermoplastic elastomers based on polystyrene-polydiene block copolymers are known. For thermoplastic elastomer behaviour, these so-called styrenic block copolymers comprise at least two blocks of polystyrene or similar rigid block segment and at least one block of poly(conjugated diene) or similar flexible block segment within the polymer chain. It is possible to hydrogenate styrenic block copolymers completely, including the aromatic unsaturation of the polystyrene blocks. However, it is usually the case that only the elastomer block is hydrogenated to improve the stabilization and aging properties of the TPE.

Preferred styrenic block copolymers are those having the formulae: ABA, (AB)ₙ X, ABAB' or ABA'B' respectively, wherein A and A' represent a poly(monovinyl aromatic) block and B and B' represent hydrogenated poly(conjugated diene(s)) blocks, wherein n is an integer ≥ 2 and wherein X is the remainder of a coupling agent. It will be appreciated that the blocks A and A', and B and B' respectively are equal or different from each other, in that the blocks A are larger than the blocks A' and the blocks B are larger than B' or B and B' are equal.

Most preferred block copolymers have the formulae ABA or (AB)ₙ X, wherein A represents a polymer block of one or more monovinyl aromatic monomers selected from styrene, C₁ -C₄ alkylstyrene and C₁₋₄ dialkylstyrene and in particular styrene, α-methylstyrene, o-methylstyrene or p-methylstyrene, 1,3-dimethylstyrene, p-tert-butylstyrene or mixtures thereof and most preferably styrene only, wherein B represents a polymer block of one or more conjugated diene monomers containing from 4 to 8 carbon atoms, such as 1,3-butadiene, 2-methyl-1,3-butadiene (isoprene), 2,3-dimethyl-1,3-butadiene or mixtures thereof, and preferably butadiene or isoprene and most preferably butadiene.

Most preferred block copolymers ABA or (AB)n X comprise substantially pure poly(styrene) blocks, each having a true molecular weight in the range of from 5,000 g/mole to 50,000 g/mole while the total apparent molecular weight is in the range of from 100,000 to 700,000 g/mol and preferably from 100,000 to 500,0000 g/mol.

Preparation methods for such polymers may be found in **US 3231635 ; US 3251905 ; US 3390207 ; US 3598887 and US 4219627 , in EP 0413294 A; EP 0387671 A** and **EP 0636654 A,** and in **WO 9422931 .** Processes for the selective hydrogenation of the B blocks were known from e.g. **US 3113986 ; US 3700633 ; US 4226952 ; US 5039755 and US RE27145** . The disclosures of these before mentioned documents are herein incorporated by reference.

Suitable representatives of said most preferred block copolymers are those available under the trade names KRATON®, SEPTON™ and TUFTEC™, for instance KRATON G 1650, KRATON G 1651, KRATON G 1652, KRATON GMD 6917 ES, KRATON GMD 6933 ES, KRATON G 1657, KRATON GRP 6924 ,SEPTON 4055,SEPTON 4077 and TUFTEC H 1272.

Like most conventional vulcanized rubbers - and unlike most thermoplastics - TPE's are hardly ever used commercially as pure materials. To achieve the particular requirements for each end use, they are compounded with other polymers, oils, resins, fillers, etc. Thus, it is very common to mix block copolymers of different molecular weight or chemical composition. It is also very common to use a blend of one or more styrenic block copolymers, particularly the (selectively) hydrogenated styrenic block copolymers, with a plastic and/or plasticizer, usually a polypropylene or similar polyolefin resin (having a PI of less than 20, generally less than 5) as plastic and/or an oil as plasticizer. Such blends are used by compound formulators as alternative for the pure styrenic block copolymer, provided that the blend remains compatible with component (i) and still meets the compression set parameter. Such blends therefore typically comprise from 0 to 90 wt% of a plasticizer and/or from 0 to 40 wt% of a plastic.

Suitable plasticizers and thermoplastics are known and described, for instance, in the patent literature discussed in the background section of this application. The plasticizer may for instance be an oil, generally a paraffinic, naphtenic or aromatic oil derived from petroleum fractions, but preferably a paraffinic oil. Oils with high aromatic contents are generally avoided in case of styrenic block copolymers, as they plasticize the polystyrene domains. Examples of alternative plasticizers are aliphatic synthetic plasticizers or oligomers of randomly or sequentially polymerised styrene and conjugated diene, oligomers of conjugated diene such as butadiene or isoprene, liquid polybutene-1 and ethylene propylene rubbers, all having a weight average molecular weight in the range of from 300 to 30,000, preferably from 500 to 25,000 and more preferably from 500 to 10,000 g/mole.

In terms of dynamically cured TPE compositions for use as component (ii) reference is made to **US 3037954** , which discloses the technique of dynamic vulcanization wherein a vulcanizable elastomer is dispersed into a resinous thermoplastic polymer and the elastomer is cured while continuously mixing and shearing the polymer blend. The resulting composition is a microgel dispersion of cured elastomer, such as EPDM rubber, butyl rubber, chlorinated butyl rubber, polybutadiene or polyisoprene in an uncured matrix of a thermoplastic polymer such as polypropylene. These so-called TPV's may be made for instance by the methods found in **US 4130534 ; US 4130535 ; US 4594390 ; US 5100947** ; **US 5157081 ; US 5177147 , US 5290886** and in **WO 9202582 ,** all of which are fully incorporated by way of reference.

The vulcanizable elastomer may be prepared by the polymerization of one or more, usually two or more, alpha-monoolefins, preferably with a polyene, generally a diene. Examples of such components include ethylene-propylene rubber (EPM) or the terpolymer of ethylene, propylene and a diene monomer (EPDM). Butyl rubbers may also be used, which expression includes polymers and copolymers of an iso-olefin. Other vulcanizable elastomers include styrene-butadiene rubbers, polydienes and natural rubber.

The vulcanizable elastomer may be a thermoplastic elastomer by itself, for instance a styrenic block copolymer.

Suitable TPV's that are available commercially are those sold under the trademarks SANTOPRENE™, RTP™, UNIPRENE™ or for instance sold as DuPont™ ETPV.

Again, these TPV's may comprise a plasticizer and/or a plastic, similar at the styrenic block copolymers described hereinabove.

The compositions of the invention may include reinforcing and non-reinforcing fillers, antioxidants, stabilizers, lubricants, anti-blocking agents, anti-static agents, waxes, foaming agents, pigments, flame retardants and other processing aids known in the rubber compounding art. Such additives can each occur in a proportion of up to 60 wt% of the total composition. Fillers and extenders which can be utilized include conventional inorganics such as calcium carbonate, clays, silica, talc titanium dioxide, carbon black and the like.

According to a preferred embodiment of the present invention the thermoplastic elastomer compositions are prepared by mixing component (i) with a component (ii). Preferably the MFR of component (i) does not differ than a factor 10 in comparison to that of component (i).

It will be appreciated that another aspect of the present invention is formed by a process for the preparation of shaped polymeric articles, using a hereinbefore specified TPE composition of the present invention as starting material, and comprising a non-supported elongational step like foaming, blow moulding, profile extrusion, calendaring or thermoforming, and in particular foaming.

Moreover, still another aspect of the invention is formed by shaped foamed, flexible TPE articles obtainable by said process and preferably those having a foam density of below 600 kg/m3.

The thermoplastic elastomeric compositions of this invention can be foamed by using conventional foaming procedures, which are well known in the art. In general, these procedures include (1) heating the TPE composition to a temperature above the melting point of component (ii), (2) adding a blowing agent, and (3) releasing the TPE composition to atmospheric temperature and pressure. Depending on the type of blowing agent employed, the blowing agent may be added to the TPE composition prior to heating it in the foaming process, although it is preferred to add the blowing agent to the TPE composition while it is in its molten state. Also, high pressure is typically required to prevent the foaming agent from prematurely expanding prior to releasing the TPE composition to atmospheric temperature and pressure. Where a chemical blowing agent is employed, the step of heating should heat the TPE composition and blowing agent high enough to trigger the chemical decomposition of the blowing agent.

In one embodiment, the TPE compositions of this invention are foamed by using an extruder, such as a single or twin screw extruder. Upon releasing the TPE composition from the extruder, the extrudate can be shaped, such as by extruding through a shaping die to form a profile. Alternatively, the TPE composition can be injected in a mould to produce a foamed thermoplastic part.

In one preferred embodiment, the TPE composition is foamed by using a single crew extruder that includes a two-stage shearing section that includes spaced blisters, and a homogenizing section between the blisters, and a homogenizing section downstream of the blisters. By using this extruder, water can be used as a blowing agent to produce technologically useful foam profiles. This extruder and the method for its use are disclosed in US 5567370 , which is incorporated herein by reference.

The foaming agent may include physical blowing agents, chemical blowing agents, or both. Preferably, the blowing agents should be soluble in the thermoplastic phase of the TPE composition at the operating conditions of temperature and pressure, i.e., while in the extruder, and phase separate at atmospheric pressure and ambient temperature, or at a temperature and pressure that is lower than the conditions within the extruder.

The physical blowing agents may include water, hydrocarbons such as pentane, propane and butane, fluorocarbons, hydrofluorocarbons, chlorofluorocarbons, hydrochlorofluorocarbons, nitrogen, and super critical fluids such as carbon dioxide. Nitrogen is the preferred blowing agent

The physical blowing agents should be used in an amount from about 0.1 to 10 parts by weight, and preferably from about 0.5 to 5 parts by weight, based on the total weight of the TPE composition and the blowing agent mixture.

Chemical blowing agents include both exothermic and endothermic blowing agents. A very suitable blowing agent is HYDROCEROL™ B1 H40, but many other blowing agents may be used as well.

The chemical blowing agents is preferably used in an amount from 0.5 to 10 parts by weight, and more preferably from 1 to 7 parts by weight, based on the total weight of the TPE composition and the blowing agent mixture combined. If necessary, a foaming assistant such as a nucleating agent may be added. These nucleating agents are well known to those skilled in the art, as disclosed in THRONE, James L. Thermoplastic Foams. Hinckley, Ohio 1996, . , which is incorporated herein by reference.

The present invention will be elucidated by the following examples, however without restricting its scope to these specific embodiments.

**Examples**

**Melt strength test description**
To test the melt strength and draw ratio at break, compounds were extruded in a Gottfert single screw laboratory extrusiometer (Diameter = 20 mm, UD = 20) equipped with a capillary die (L = 30 mm, D = 3 mm and an entrance angle of 90°). The throughput was kept at 10 g/min +/- 0.5 g/min for all the tests and was precisely measured for each experiment. Several measured materials were dry mixes of TPE pellets with some additional PP pellets. The extruded strands were always homogeneous, showing rapid mixing and good homogeneity and compatibility of the measured systems.

The extruded polymer strand was drawn in uniaxial extension by a take-up device (Rheotens 71.97 apparatus). The distance between the die and the pulling system corresponded to a strand of Ls = 180 mm. The tensile force necessary for stretching the polymer was recorded as a function of the speed of the wheels of the Rheotens apparatus. The wheel velocity at zero pulling force (Vs) was recorded at the start of the measurement. The acceleration of the wheels of the Rheotens apparatus was kept constant at 2.4 mm/s². The Melt Strength is the maximum tensile force reached, usually just before strand breakage. Melt strength curves were all measured at 180°C. Draw ratio and stress values as well as apparent elongational viscosities were calculated from the measured strength and wheel speed.

**Material description**

As component (i) a High Melt Strength Linear (HMSL) polypropylene (i) was used. It has a MFR (2.16 kg/230°C) of 1 dg/min , an ultra high Pl of 25 and is produced by the Basell Spherizone process.

Additional thermoplastic polyolefins used in the examples (component iv) were the following. Pro-Fax™ PF 814 (MFR = 3 dg/min, 2.16 kg/230°C) is a High Melt Strength Branched (HMSB) polypropylene commercially available from Basell and specifically designed for foamed polyolefin applications. MOPLEN™ HP1078 (MFR = 3 dg/min, 2.16 kg/230°C) is a homopolypropylene designed for BOPP film application. It has a PI of 5.3 and is available from Basell.

As plasticizer, component (v), a paraffinic oil has been used; PRIMOL™ 352.

As block copolymer were used either KRATON® MD-6933ES, a high Mw linear styrene-ethylene/butylene-styrene block copolymer having a polystyrene content of 31 % by weight or KRATON G-1657, a linear styrene-ethylene/butylene-styrene block copolymer having a polystyrene content of 14% by weight containing 30%w of diblock styrene-ethylene/butylene. Moreover, KRATON KG-2705 was used, which is sold as a TPE blend composed of a hydrogenated styrenic block copolymer compounded with oil, a polypropylene and additional stabilisers. KG-2705 has a Hardness of 58 shore A, a Compression Set (CS, 24h at room temperature) of 22% and a density of 900 kg/m³.

As example of a block copolymer different from the styrenic block copolymers, HYTREL™ 4056 has been included, a thermoplastic polyester elastomer sold by DuPont. It has a hardness of 35 shore D, a processing temperature range of 165-185°C, and a density of 1170 kg/m³.

SANTOPRENE™ 201-64, available from AES, is a dynamically vulcanized EPDM/PP based TPV. It has a Hardness 5s of 66 Shore A, a density of 970 kg/m³, and a CS of 23% at room temperature after a 70h of compression.

IRGANOX™ 1010 and PS 800 are stabilizers. IRGANOX 1010 is tetrakis-ethylene-(3,5-di-tertiary-butyl-4-hydroxy-hydrocinnamate) methane. IRGANOX PS 800 is dilauryl thiopropionate.

HYDROCEROL™ BIH40 is a master batch of endothermic chemical blowing agent available from CLARIANT.

**Example 1**
The results of Example 1 are included as comparative experiments 1* and 2*, and inventive experiments 3 and 4 in Table 1. The composition of experiments 1*, 2* and 3 all contained the same amount of thermoplastic polyolefin, but only the composition of experiment 3 contained the High Melt Strength Linear PP as component (i). Component (ii) of the compositions was the same in each case, it was a blend (iii) made of 100 parts by weight (pbw) KRATON MD-6933ES (as component ii) + 35pbw MOPLEN HP1078 (as component iv)+ 150 pbw PRIMOL 352 (as component v) modified with 4.76 wt% of different additional plastic polyolefins.

The composition of experiment 1* contained 4.76% additional HP1078 (PI of 5.3). It exhibited relatively low melt strength properties as measured with the rheotens. The composition of experiment 2* contained 4.76% of a BRANCHED high Melt strength polypropylene. This experiment shows that the polypropylene must be linear; there was no significant improvement versus the first experiment. The composition of experiment 3 showed a very significant improvement versus the two first experiments.

The composition of experiment 4 was similar to that of experiment 3, but having a content of component (i) of 8.7 %wt. It gave quite similar melt strength performances as in experiment 3 despite the doubling of the content of HMSL PP. Although the die swell ratio is somewhat high, which is usually not appreciated in the industry, it can be concluded that compositions containing up to 10 wt% of component (i) are fully effective up to around 10%, albeit that at 5wt% already significant improvements are found.

**Table 1**

| **Experiment n°** | | **1*** | **2*** | **3** | **4** |
|---|---|---|---|---|---|
| Composition | | | | | |
| (i) HMSL PP | wt% | 0 | 0 | 4,76 | 8,7 |
| (ii) TPE | wt% | 100 | 100 | 95,24 | 91,3 |
| total thermoplasti c content | wt% | 16,5 | 16,5 | 16,5 | 17,0 |
| remarks | | | 4,76% of PP HMS BRANCHED | 4,76% of PP HMS LINEAR | |

| Rheotens properties at 180°C | | | | | |
|---|---|---|---|---|---|
| Maximum pulling Force | N | 0,07 | 0,07 | 0,80 | 0,79 |
| Stress maximum | kPa | 34 | 43 | 209 | 196 |
| Draw Ratio V(Fmax)/V0 | / | 3,4 | 4,3 | 1,85 | 1,75 |
| Swell Ratio | / | <1 | <1 | 1,12 | 1,28 |
| * not according to the invention | | | | | |

**Example 2**
This example shows that 3 wt% HMSL PP significantly effects the rheological behaviour of various commercial TPE's. The measured melt strength (maximum pulling force as measured in Rheotens 71.97) and the corresponding stress values, when component (i) was included in the composition, were each time far superior compared to the compositions containing the same TPE(ii) without the presence of the HMSL PP (i). The maximum apparent elongational viscosity was not only significantly increased but also appeared at higher deformation rates.

**Table 2**

| **Experiment n°** | | **5*** | **6** | **7*** | **8** | **9*** | **10** |
|---|---|---|---|---|---|---|---|
| Composition | | | | | | | |
| (i) HMSL PP | wt% | 0 | 2,9 | 0 | 3 | 0 | 2,9 |
| (ii) TPE | wt% | 100 | 97,1 | 100 | 97 | 100 | 97,1 |
| TPE nature | | KRATON KG-2705 | | HYTREL 4056 | | SANTOPRENE 201-64 | |

| Rheotens properties at 180°C | | | | | | | |
|---|---|---|---|---|---|---|---|
| Maximum pulling force | N | 0,06 | 0,4 | < 0,02 | 0,25 | 0,44 | 0,65 |
| Stress maximum | kPa | 43 | 113 | +/-30 | 100 | 124 | 175 |
| Apparent elongational viscosity at 0.2s⁻¹ | kPa.s | 90 | 710 | / | / | 560 | 1000 *0,16s*^{*-1*} |
| Max apparent elong. Viscosity | kPa.s | 120 | 840 | | | 640 | 1000 |
| | s ⁻¹ | 0,08 | 0,23 | | | 0,08 | 0,16 |
| Elong. deformat ion rate | | | | | | | |
| Draw Ratio V(Fmax)/ V0 | / | 4,8 | 2 | > 10 | 2,8 | 2 | 1,9 |
| Swell Ratio | / | <1 | 1.0 | <1 | <1 | 1,00 | 1,03 |
| *not according to the invention | | | | | | | |

**Example 3**
Experiments 11-13, compiled in Table 3, demonstrate the efficiency of the HMSL PP, used as component (i) to modify the Melt strength of various TPE systems significantly, even at low levels. As TPE in experiment 11 a blend was used of a 100 pbw KRATON MD-6933ES, 35 pbw Adstif HA722J and 150 pbw PRIMOL 352. The TPE component in experiment 12 was a mixture of 80 wt% the TPE blend from experiment 11 plus 20 wt% of HYTREL 4056. The TPE component in experiments 13 and 14* was a blend of 100 pbw KRATON G-1651 with 200 pbw of PRIMOL 352.

The compositions 11-13 contained a very small amount of HMSL PP as component (i). It had a significant effect on the Melt strength. On the other hand, Experiment 14* contained no HMSL PP and was clearly inferior in rheological performances.

**Table 3**

| **Experiment n°** | | **11** | **12** | **13** | **14*** |
|---|---|---|---|---|---|
| Composition | | | | | |
| (i) HMSL PP | wt% | 1,7 | 1,4 | 3,2 | 0 |
| (iii) TPE blend | wt% | 98,3 | 98,6 | 96,8 | 100 |

| Rheotens properties at 180°C | | | | | |
|---|---|---|---|---|---|
| Fmax | (N) | 0,65 | 0,45 | 0,45 | < 0,05 |
| Stress max (kPa) | kPa | 202 | 134 | 102 | <7 |
| Draw Ratio V(Fmax)/V0 | / | 2,2 | 2,1 | 1,6 | +/- 1,0 |
| Swell Ratio | / | 1,18 | 1,18 | <1 | / |

**Example 4:**
In this Example again blends have been used as TPE component. The blend used in Experiments 15* and 17 was made of 30 pbw KRATON MD-6933ES, 5 pbw KRATON G-1657, 17 pbw MOPLEN HP-1078 and 47 pbw PRIMOL 352. The TPE blend of Experiment 15* was used as such, to that in Experiment 17 1.5 wt% of HMSL PP was added. The composition of the blend used in experiment 16* contained 18 pbw MOPLEN and only 47 pbw PRIMOL. Using a slightly higher thermoplastic polyolefin component in the TPE blend, the overall content of thermoplastic polyolefin in Experiment 16* was therefore the same as that in Experiment 17. These compositions were then used for a foaming experiment.

The foaming process was the following: the TPE was dry mixed with 2% of BIH40 and fed to the single screw extruder. The extruder temperature profile was: hopper/220°C/200°C/168°C/150°C/die. The extruder screw speed was set at either 50 rpm or at 80 rpm.

It is clear from Table 4 that the addition of 1.3 wt% of HMSL PP (experiment 17) did not adversely affect the hardness or compression set values of the total composition, but did allow for a significant reduction in the density of a foamed article made thereof (at 50 rpm) and/or a significantly reduced water absorption (at 80 rpm) while keeping a foamed density below 600 kg/m³. Low water absorption means most of the cells remained closed during the foaming stage due to the higher melt strength of TPE according to the invention.

The composition of experiment 17 with its combination of low hardness, low compression set, and intrinsic properties upon foaming of low water absorption and low foam density, is clearly very suitable for applications like foamed sealing profiles used in the automotive industries.

**Table 4**

| **experiment n°** | | **15*** | **16*** | **17** |
|---|---|---|---|---|
| Composition | | | | |
| (i) HMSL PP | wt% | 0 | 0 | 1,5 |
| (iii) TPE blend | wt% | 100 | 100 | 98,5 |

| Properties measured before foaming | | | | |
|---|---|---|---|---|
| Hardness 0 s | Shore A | 61 | 66 | 62 |
| Hardness 30 s | | 57 | 61 | 56 |
| CS 24h at 100°C | % | 51 | 52 | 51 |
| CS 72h at 70°C | | 43 | 46 | 43 |

| Foamed with extruder screw speed 50 rpm | | | | |
|---|---|---|---|---|
| Density | 103kg/m3 | 0,62 | 0,62 | 0,47 |
| Water absorption | % | 17 | 17 | 18 |

| Foamed with extruder screw speed 80 rpm | | | | |
|---|---|---|---|---|
| Density | 103kg/m3 | / | 0,63 | 0,57 |
| Water absorption | % | / | 19 | 3 |
| *not according to the invention | | | | |

## Claims

1. A high melt strength thermoplastic elastomer composition, comprising:
(i) at least one linear crystalline polyolefin, having a melting temperature (Tm) of at least 100°C and a Polydispersity Index (PI) of more than 20, and
(ii) at least one thermoplastic elastomer (TPE) compatible with the polyolefin (i), wherein the TPE has a compression set below 50% at ambient temperature after 24h compression (ASTM D395-03, "Compression Set under constant deflection in air"), wherein the amount of component (i) is in the range of 0.1 to 10 wt% calculated on the whole of (i) and (ii).

2. A high melt strength thermoplastic elastomer composition as claimed in claim 1 wherein component (i) is derived from propylene as predominant or sole monomer, having a melting temperature of at least 130°C, preferably at least 140 °C.

3. A high melt strength thermoplastic elastomer composition as claimed in claim 1 or 2 wherein component (i) occurs in a proportion of from 1 to 5 wt%.

4. A high melt strength thermoplastic elastomer composition according to claim 1, wherein the components (i) and (ii) have viscosities not differing more than a factor 10 under the mixing conditions.

5. A high melt strength thermoplastic elastomer composition according to claim 1, wherein component (ii) is selected from one or more of:
thermoplastic polyurethane elastomers:
thermoplastic polyester elastomers;
polyesteramide and polyetherester amide thermoplastic elastomers as well as polyether block amide thermoplastic elastomers;
thermoplastic elastomers based on polystyrene-polydiene block copolymers; poly-alpha-olefin based thermoplastic elastomers, and
elastomer-thermoplastic blends, when dynamically vulcanized.

6. A high melt strength thermoplastic elastomer composition according to claim 5, wherein component (ii) is a styrenic block copolymer comprising at least two blocks of polystyrene or similar rigid block segment and at least one block of poly(conjugated diene) or similar flexible block segment within the polymer chain.

7. A high melt strength thermoplastic elastomer composition according to claim 5, wherein component (ii) is a dynamically cured TPE composition of a blend of either a vulcanizable elastomer prepared by the polymerization of one or more alpha-monolefins, optionally with a polyene, or a butyl rubber dispersed into a resinous thermoplastic polymer and cured while continuously mixing and shearing the blend.

8. A high melt strength thermoplastic elastomer composition according to claim 5-7, wherein component (ii) is a blend (iii) compatible with the polyolefin (i), wherein the blend has a compression set below 50% at ambient temperature after 24h of compression (ASTM D395-03, "Compression Set under constant deflection in air"), which blend comprises the TPE (ii) and a thermoplastic, preferably a thermoplastic polyolefin (iv) different from component (i) in an amount of from 0 to 40 wt% and/or a plasticizer (v) in an amount of from 0 to 90 wt% calculated on the blend (iii).

9. Process for the preparation of shaped polymeric articles, **characterized in that** a high melt strength thermoplastic elastomer composition according to the claims 1-8 is used as starting material, and comprising a non-supported elongational step, like foaming, blow moulding, profile extrusion, or thermoforming.

10. Shaped flexible thermoplastic elastomer articles, obtainable by the process of claim 9.
